Europäisches Patentamt

European Patent Office

Office européen des brevets

(19)

(11) Publication number: **0 371 647**
**A1**

(12) # EUROPEAN PATENT APPLICATION

(21) Application number: 89311665.7

(51) Int. Cl.⁵: **B01D 11/02, B09B 5/00**

(22) Date of filing: **10.11.89**

(30) Priority: **15.11.88 US 272207**

(43) Date of publication of application:
**06.06.90 Bulletin 90/23**

(84) Designated Contracting States:
**AT BE CH DE ES FR GB GR IT LI LU NL SE**

(71) Applicant: CHARDON, INC.,
Highway 105 East
Conroe Texas 77303(US)

(72) Inventor: **Branham, Donald Ramon**
**36 Camelback Court**
**Conroe Texas 77304(US)**
Inventor: **Jalalabadi, Hossain**
**3619 Lost Oak**
**Spring Texas 77388(US)**
Inventor: **Fearon, Lee C.**
**5246 S. 76th East Avenue**
**Tulsa Oklahoma 74145(US)**

(74) Representative: **Hustwitt, Philip Edward et al**
**Hustwitt & Co. St. George's House 44 Hatton**
**Garden**
**London, EC1N 8ER(GB)**

(54) Method for removing organic contaminants from soil.

(57) A process for removing organic contaminants from soil is disclosed. The process steps include:
1. Reducing the particle size of the contaminated soil;
2. Mixing the contaminated soil with solvent;
3. Forming a slurry;
4. Separating the solid portion of the slurry from the liquid portion of the slurry;
5. Drying the solid portion;
6. Removing water from the liquid portion; and
7. Distilling the solvent from the liquid portion;
8. Disposing of the remaining liquid portion which contains the contaminants.

The solvent may be recycled for subsequent use. Within one cycle the process is capable of reducing the contamination in the soil to a level below EPA requirements.

FIG-1

# METHOD FOR REMOVING ORGANIC CONTAMINANTS FROM SOIL

The present invention relates to a method for removing organic contaminants such as crude petroleum, dioxin and PCBs from soil.

The land, air and water are being polluted at an alarming rate. Much of the pollution results in or is caused by contaminated soil. Soil pollution may be caused by dumping of chemical waste, improper use of fertilizers and weed killers and use of "mud" in drilling operations. As such, a great need exists to control the pollution of soil.

Several solutions have been proposed and implemented to control soil pollution. Landfills are probably the most used and oldest method of controlling soil pollution. Landfills are used to contain and isolate polluted soil.

However, landfills have several drawbacks. For instance, contaminants may leak out of the landfill area and into ground water. Landfills also rely on available space. Available space is quickly being exhausted because of the amount of polluted soil being generated.

More recently, methods have been developed to decontaminate the soil. These methods include but are not limited to:

1. Burning the contaminated soil;

2. Washing contaminated soil with acids and/or bases;

3. Heating contaminated soil to vaporize contaminants; and

4. Dissolving contaminants from the soil with solvents.

These methods reduce the amount of contaminants. However, many of these methods require several cycles to make any significant reduction in the contamination level. Furthermore, many of these methods have been incapable of reducing the contamination to a level acceptable by the EPA.

Accordingly a need exists to reduce or eliminate contaminants from polluted soil. The problems identified with the, present decontamination methods are illustrative rather than exhaustive.

Briefly, the present invention is a process for removing organic contaminants from soil. The steps of the process include:

a. Mixing the soil with an organic solvent;

b. Forming a slurry of the solvent and soil;

c. Separating the liquid portion from the solid portion of the slurry;

d. Drying the solid;

e. Removing water from the liquid portion;

f. Distilling the solvent from the liquid portion and reusing it in step a; and

g. Disposing of the remaining liquid portion which contains the contaminants.

The inventive method described is capable of reducing the contamination level of soil to a level below that required by the EPA. That efficiency is in large part due to two key features.

First, the preferred solvents are highly miscible with the contaminants. High miscibility is especially helpful in maintaining the solvent's ability to dissolve contaminants.

Second, removal of water from the solvent increases the ability of the solvent to extract contaminants. It also allows for more even heating of the solvent solution which will also increase the solvents ability to extract soil.

The method and solvents disclosed are also safe. The relatively low toxicity and high flash points of the solvents make using these solvents safer than others that are more hazardous.

The features identified are illustrative rather than exhaustive of the present invention. Additional features and advantages of the present invention will be evident to those of ordinary skill in the art when reading the Description of the Preferred Embodiment in view of the drawing Figure.

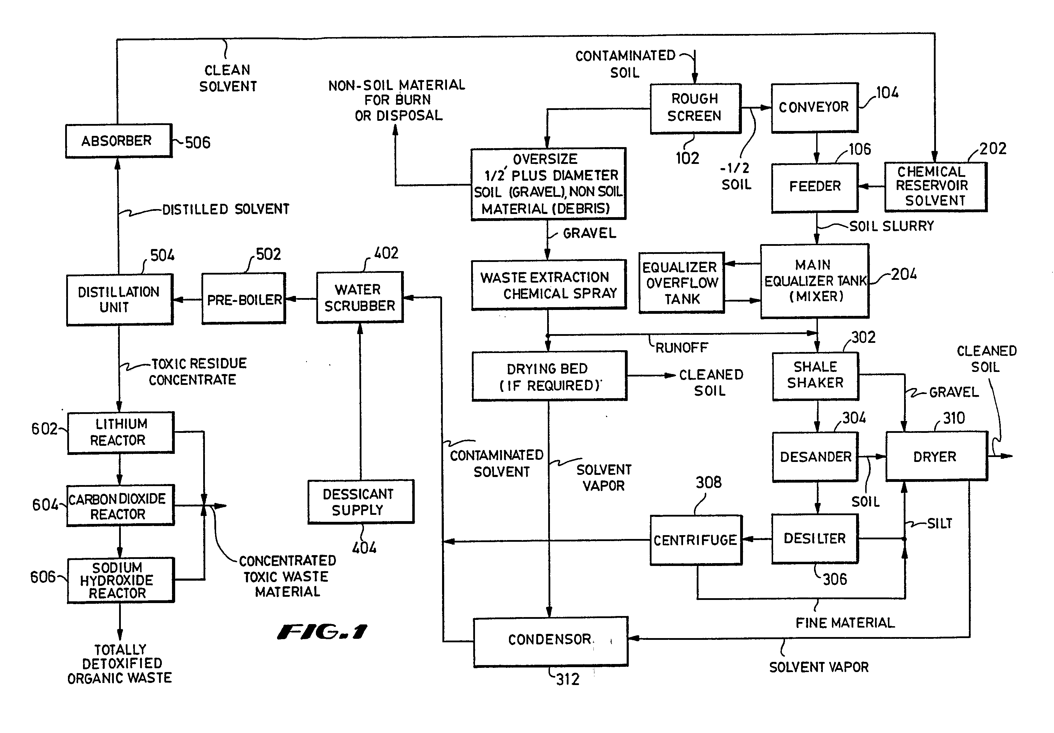

Figure 1 is a schematic diagram of the preferred embodiment of the inventive process.

A schematic diagram of a preferred process 10 for removing organic contaminants from soil 12 is shown in Fig. 1. Process 10 involves mixing soil 12 with a solvent 14 to form a slurry 16. Solvent 14 dissolves the organic contaminants.

For general use decontamination, the preferred solvent 14 is either isopropyl alcohol (IPA), tertiary butyl alcohol (TBA) or mixtures of the two. The range of each solvent by weight in the mixtures is preferably about 50-90 per cent IPA and about 10-50 per cent TBA.

For soil 12 with high benzene and/or high naphthalene content, methanol is the preferred solvent 14.

For soil 12 with high tar content, methylcyclohexane (MCYHN), 2,2,4 trimethylpentane (TRMP), tertiary pentanol (TP) or mixtures of any two or more of these solvents is preferred. TP would be limited to comprise between about 5-25 per cent of any of those mixtures.

The preferred process 10 includes a sizing system 100, mixing system 200, soil recovery system 300, solvent recovery system 400 and waste collection system 500.

## Sizing System 100

Sizing system 100 separates large particles of soil 12, rocks and roots (collectively "LGPT") from smaller particles ("SMPT") of soil 12. Large particles of soil 12, rocks and roots are washed separately by the same solvent 14.

Sizing system 100 includes a rough screen 102, metal conveyor 104 and feeder 106. Screen 102 preferably includes a U.S. sieve screen. Screen 102 separates the large particles, rocks and roots from smaller particles of soil 12.

Metal trap (not shown) may be incorporated and is preferably an electromagnetic tramp metal removal system. Metal trap removes metal particles from the screened soil. After going through the metal trap, soil is deposited in feeder 106 or other like containment means.

## Mixing System 200

Mixing system 200 mixes the screened contaminated soil 12 with solvent 14 ("SO 14")to form slurry 16 ("SU 16"). Mixing system 200 preferably includes feeder 106, a reservoir 202, and mixer 204.

Reservoir 202 holds solvent 14. Solvent 14 is fed to reservoir 202 from the solvent recovery system 400 and/or a new solvent supply (not shown). Reservoir 202 deposits solvent into feeder 106.

Mixer 204 receives soil and solvent from feeder 106. Preferably mixer 204 is a static mixer having a plurality of nozzles disposed in a cylindrical tank where the nozzles cause circular motion of the slurry in the tank. Pumping input action operates the mixer. More than one mixer 204 may be employed.

An additional mixer may be disposed in fluid communication with mixer 204. Slurry 16 is deposited into the additional mixer to afford the solvent 14 additional time to extract contaminants from the soil.

Other mixing apparatus may also be incorporated into the mixing system 200. For instance, heaters may be used to heat the solvent 14 to increase its extraction capability. Blenders and additional mixers may also be incorporated.

## Soil Recovery System 300

Soil recovery system 300 is disposed in communication with mixing system 200. Soil recovery system 300 preferably includes in series a shale shaker 302, desander 304, desilter 306 and centrifuge 308, dryer 310 and condensor 312.

Soil 12 from the mixing system 300 is deposited on shaker screen 302. Shale shaker 302 separates the slurry 16 into coarse particles (approximately 100 microns or greater) and a slurry of solvent 14, dissolved contaminants and fine soil particles (approximately less than 100 microns). The coarse particles are dried. Drying may be accomplished ambiently or more preferably by dryer 310.

Next, the remaining slurry 16 is deposited into desander 304. The desander 304 separates the slurry into sand (soil particles greater than 30 microns) and a slurry of solvent, dissolved contaminants and particles less than 30 microns. The extracted particles are dried ambiently or more preferably in dryer 310.

The remaining slurry 16 is deposited in desilter 306. Desilter 306 preferably separates the slurry into a liquid and silt. The remaining liquid includes the solvent, dissolved contaminants and very fine soil particles (approximately 2 microns or less). That mixture is next deposited in the water removal system 400. The silt may be dried ambiently or in a dryer 310.

Solvent vapors from the dryer 310 are transported to and condensed in condensor 312.

## Water Removal System 400

Water Removal System 400 is disposed in communication with the soil recovery system 300. More specifically, the water removal system is in fluid communication with condensor 312 and centrifuge 308.

Preferably water removal unit 400 includes water scrubbers 402. A desiccant 404 ("DESI") is used in the scrubbers to assist in removing water. The preferred desiccant is anhydrous sodium sulfate either impregnated with or followed by any of the following:

(1) Turnbull Blue Indicator (ferrous ferrocyanide) that includes precursor reagents:

a. Ferrous Sulfate or Ferrous Lactate; and

b. Potassium, Sodium, Magnesium, or Calcium

Ferrocyanide;

(2) Prussian Blue or Berlin Blue Indicator (ferric ferrocyanide) that includes precursor reagents:

a. Ferric Oxalate and

b. Potassium, Sodium, Magnesium, or Calcium Ferrocyanide;

(3) Mixed Indicator Ferrous Ferricyanide and Ferrous Ferrocyanide that includes precursor reagents:

a. Ferrous Sulfate;

b. Either Sodium, Potassium, Calcium, or Magnesium Ferricyanide; and

c. Either Sodium, Potassium, Calcium, or Magnesium Ferrocyanide;

(4) Mixed Indicator Ferric Ferrocyanide and Ferric Ferricyanide that includes precursor reagents:

    a. Ferric Oxalate;

    b. Either Potassium, Sodium, Calcium, or Magnesium Ferrocyanide; and

    c. Potassium, Sodium, Calcium, or Magnesium Ferricyanide;

    (5) Mixed Indicator Ferrous Ferricyanide and Ferric Ferricyanide that includes precursor reagents:

    a. Potassium, Sodium, Calcium, or Magnesium Ferricyanide;

    b. Ferrous Sulfate; and

    c. Ferric Oxalate;

    (6) Ferrous Ferrocyanide and Ferric Ferrocyanide Mixed Indicator that includes precursor reagents:

    a. Potassium, Sodium, Calcium, or Magnesium Ferrocyanide;

    b. Ferrous Sulfate; and

    c. Ferric Oxalate; or

    (7) All Four--Ferrous Ferricyanide, Ferric Ferrocyanide, Ferric Ferricyanide, Ferrous Ferrocyanide Mixed Indicator with precursor reagents:

    a. Potassium, Sodium, Calcium, or Magnesium Ferricyanide;

    b. Either Potassium, Sodium, Calcium, or Magnesium Ferrocyanide;

    c. Ferrous Sulfate; and

    d. Ferric Oxalate.

The above combinations of indicator precursor reagents react in the presence of water (the missing "reagent") forming highly colored blue or blue green products showing that water is present in the organic medium and that the sodium sulfate desiccant is exhausted.

The reason these indicator precursor reagents are preferred is that they:

    (1) Have some water solubility;

    (2) Are insoluble in the organic medium of solvent mixture and contaminants; and

    (3) Produce products have no solubility in water or the organic medium.

As such, neither the reagents or reaction products are depleted by fluid flow. Sodium sulfate is the preferred desiccant because it has no solubility in the process organic media. Other more expensive and toxic sources of ferricyanides and ferrocyanide such as barium, strontium, and lithium may be used. Calcium Chloride and Cobaltous Chloride may be used but are not preferred because of their solubility in the organic medium.

There are other sources of ferrous and ferric iron. Ferrous lactate would be acceptable, but the sodium, potassium, and lithium salts have some solubility in organic media. If alkali lactate is dissolved in solvent eventually it will be removed in the distillation step. If there is no objection to this material in the residue, then it may be used.

Other solvent purifying systems may be incorporated in the water removal system 400 including hydrogen sulfide removal units.

## Solvent Recovery System 500

Solvent recovery system 500 is disposed in communication with the water removal system 400. Solvent recovery system 500 includes a preboiler 502 and , distillation unit 504.

Preboiler 502 is disposed in communication with water removal system 400. The liquid of solvent and contaminants taken from the water removal system 400 is deposited in the preboiler 502. There the liquid is heated to a temperature below the solvent 14 boiling point. The heated liquid is fed into the distillation unit 504. In the distillation unit 504, the liquid is heated to vaporize the solvent 14 from the liquid.

The vaporized solvent 14 is deposited in absorber 506. The absorber condenses the solvent which is then transported to the solvent reservoir 202.

## Waste Collection Unit 600

Waste collection system 600 is in communication with distillation unit 504. Preferably, waste collection system 600 includes the residue reservoir 506, and depending on the contaminant, a lithium reactor 602, a carbon dioxide reactor 604 and a sodium hydroxide reactor 606 or any combination of the reactors. Waste collection system 600 collects the remaining liquid for disposal or detoxification. The remaining liquid contains some solvent and dissolved contaminants.

## Claims

1. A process for removing organic contaminants from soil comprising the steps of:

    a. mixing the contaminated soil with a solvent to form a slurry having:

i. a liquid portion comprising a mixture of the solvent and contaminants; and

ii. a solid portion comprising particles of soil;

    b. separating the solid portion from the liquid portion of the slurry;

    c. drying the solid portion;

    d. removing any water from the liquid portion;

    e. removing the solvent from the liquid portion; and

    f. disposing of the remaining liquid portion containing the contaminants.

2. A process according to claim 1 where the solvent may be selected from a group consisting of 2-isopropyl alcohol, tertiary butyl alcohol, mixtures of isopropyl alcohol and tertiary butyl alcohol, methanol, methylcyclohexane, 2-2-4 trimethylbutane, tertiary pentanol, and mixtures of methylcyclohexane, 2-2-4 trimethylbutane and tertiary pentanol.

3. A process according to claim 1 further including the step of recycling the solvent.

4. A process for removing organic contaminants from soil comprising the steps of:

a. sizing the soil;

b. mixing the contaminated soil with a solvent;

c. forming a slurry of she soil and solvent that includes:

i. a liquid portion comprising mixture of the solvent and the dissolved organic contaminant; and

ii. a solid portion comprising particles of soil;

d. separating the liquid portion from the solid portion;

e. drying the solid portion;

f. collecting the vapor emitted while drying the soil;

g. condensing the vapor;

h. mixing the condensed vapor with the liquid portion;

i. removing water from the liquid portion;

j. distilling the solvent out of the liquid portion;

k. collecting the remaining liquid portion that comprises the organic contaminant;

l. disposing of or detoxifying the contaminant;

m. condensing the distilled solvent; and

n. recycling the solvent to the mixing step.

5. A process according to claim 4 where the solvent may be selected from a group consisting of isopropyl alcohol, tertiary butyl alcohol, mixtures of isoprcpyl alcohol and tertiary butyl alcohol, methanol, methylcyclohexane, 2-2-4 trimethylbutane, trimethylbutane, and mixtures of methylcyclohexane, 2-2-4 trimethylbutane and tertiary pentanol.

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-U-8 710 825 (K.-H. KRESKEN) <br> * Page 8, lines 1-9; page 12, lines 21-28; page 15, line 8 - page 21, line 21; figures 1,2 * | 1-5 | B 01 D 11/02 <br> B 09 B 5/00 |
| A | DE-A-3 803 634 (WEISS & CO.) <br> * Column 2, line 20 - column 5, line 21 * | 1-5 | |
| A | EP-A-0 287 694 (E. WESSLING) <br> * Column 6, line 30 - column 7, line 47; figure * | 1-5 | |
| A | US-A-4 606 774 (T.E. MORRIS) <br> * Column 1, line 1 - column 3, line 55; figure 1 * | 1-5 | |
| A | EP-A-0 059 020 (T.N.O.) <br> * Page 5, line 1 - page 6, line 13; page 7, lines 17-30 * | 1-5 | |
| | | | TECHNICAL FIELDS SEARCHED (Int. Cl.5) |
| | | | B 09 B <br> C 02 F |

The present search report has been drawn up for all claims

| Place of search | Date of completion of the search | Examiner |
|---|---|---|
| THE HAGUE | 26-03-1990 | LAVAL J.C.A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)